# EUROPÄISCHE PATENTSCHRIFT

(11) **EP 0 915 931 B1**
(45) Veröffentlichungstag und Bekanntmachung des Hinweises auf die Patenterteilung: **17.05.2000**
(21) Anmeldenummer: 97918932.1
(22) Anmeldetag: 18.07.1997
(51) Int. Cl.: C08J 9/28, C08F 4/02, C08F 10/00

(54) **VERFAHREN ZUR HERSTELLUNG VON PORÖSEN POLYMERKUGELN**
PROCESS FOR PRODUCING POROUS POLYMER GLOBULES
PROCEDE DE PRODUCTION DE GLOBULES POLYMERES POREUX

(30) Priorität: 27.07.1996 DE 19630451
(43) Veröffentlichungstag der Anmeldung: 19.05.1999
(73) Patentinhaber: Solvay Deutschland GmbH, D-30173 Hannover (DE)
(72) Erfinder: BRETZ, Karl-Heinz, D-31582 Nienburg (DE); RASCHE, Heinz-Helmer, D-31303 Burgdorf (DE); DERLETH, Helmut, D-31582 Nienburg (DE); FRANCOIS, Philippe, B-1490 Court-Saint-Etienne (BE)
(74) Vertreter: Lauer, Dieter, Dr.
(86) Internationale Anmeldenummer: EP9703860
(87) Internationale Veröffentlichungsnummer: WO9804618

(56) Entgegenhaltungen:
- EP-A- 0 283 011
- EP-A- 0 563 917
- DE-A- 3 131 071
- GB-A- 2 226 320

## Beschreibung

Die vorliegende Erfindung betrifft ein Verfahren zur Herstellung von porösen kugelförmigen Teilchen im nichtnanoskalaren Bereich aus polymerem Material.

Kugelförmige Teilchen werden z. B. in großem Maßstab als Katalysator, Katalysatorträger, Adsorbenzien, Trockenmittel oder Ionenaustauscher verwendet.

Für die meisten der genannten Anwendungszwecke werden Teilchen mit einer gleichmäßigen kugelförmigen Gestalt und einem engen Kornspektrum benötigt, um somit eine möglichst gleichmäßige Packung und hohe Packungsdichte z. B. im Festbettreaktor zu ermöglichen. Werden die Teilchen im Bewegtbettreaktor eingesetzt, so wird von den Teilchen noch eine erhöhte Abriebfestigkeit erwartet.

Sollen die Teilchen als Katalysatoren oder Katalysatorträger verwendet werden, so müssen sie neben einem engen Kornspektrum eine bestimmte Oberfläche und ein spezifisches Porenvolumen aufweisen.

Kugelförmige Teilchen auf der Basis anorganischer Oxide werden z. B. nach dem allgemein bekannten Sol-Gel-Verfahren erhalten, indem zunächst ein Sol in Form einer Lösung, Suspension oder Dispersion hergestellt wird. Das Sol wird danach in tropfenförmige Teilchen überführt, die anschließend zur Gelierung gebracht werden. Dabei nehmen die Tropfen Kugelgestalt an und erstarren in einem geeigneten gasförmigen oder flüssigen Medium. Nach einem Naßprozeß wird getrocknet und getempert. Das Fertigprodukt besteht aus kugelförmigen, porösen oxidischen Teilchen.

Polymerdispersionen andererseits, sind winzige Polymerkügelchen, die in einem flüssigen Medium gleichmäßig verteilt sind. Annähernd 30 % aller Kunststoffe auf der Basis von Styrol, Butadien, Acrylsäurederivaten oder Vinylestern werden heute in Form von Dispersionen hergestellt und verarbeitet.

Zur Emulsionspolymerisation werden Monomere zunächst in Wasser gelöst oder in Form feinster Tröpfchen unter Zusatz von Tensiden emulgiert. Nach dem Starten der Polymerisationsreaktion, bei der sich Monomere zu langen Kettenmolekülen aneinanderlagern, wachsen die Tröpfchen auf Kosten der gelösten Monomere und härten schließlich unter Vernetzung zu 50 bis 1.000 nm (in Abhängigkeit vom Tensidgehalt) kleinen, kugelförmigen, unporösen Teilchen aus.

Es ist ferner bekannt, poröse, nichtnanoskalare Polymerkügelchen durch Suspensionspolymerisation in Gegenwart inerter Komponenten, die später aus dem Polymer entfernt werden können, herzustellen.

Die Polymerisation der Monomeren wird hierbei unter solchen Bedingungen durchgeführt, daß die inerten Komponenten in den während der Polymerisation gebildeten Polymerteilchen fein verteilt werden.

In einer anschließenden Verfahrensstufe werden die inerten Komponenten durch Verdampfen, Auslaugen oder auf eine andere Weise, die die gewünschte Porosität in dem Polymerteilchen bewahrt, entfernt.

Diese Verfahrensweise eignet sich jedoch nur für Polymere, deren Polymerketten eine starre zusammenhängende Gitterstruktur bilden, z. B. quervernetzte aromatische Polymere (DE 32 02 479).

Die GB 2 226 320 beschreibt ein Verfahren zur Herstellung von feinteiligen Polyethylenpartikeln, wobei Polyethylen in Gegenwart von aliphatischen Kohlenwasserstoffen oder Decahydronaphthalin erhitzt und anschließend abgekühlt wird. Die Partikelform wird durch die Polyethylenkonzentration in der Mischung gesteuert.

Ferner lassen sich poröse Polymerteilchen auf Polyvinylchloridbasis herstellen, indem man Polymerlösungen in einem erwärmten Gasstrom zerstäubt und dabei das Lösungsmittel verdampft. Hierbei ist die Wahl des Lösungsmittels von Bedeutung, da gegebenenfalls eine Molekulargewichtsveränderung vermieden werden soll und in jedem Fall keine Lösungsmittelreste im Polymer verbleiben dürfen.

Die Aufgabe der Erfindung bestand darin, ein modifiziertes Verfahren zur Herstellung poröser Polymerkugeln im Bereich von 1 bis 5.000 Micrometer bereitzustellen.

Erfindungsgemäß werden nichtvernetzte, also lineare Polymere, insbesondere Polyolefine oder PVC, bei erhöhter Temperatur in einem Lösemittel gelöst und anschließend bis auf Raumtemperatur abgekühlt. Bei der Wahl des Lösungsmittels kommt es darauf an, ein Lösungsmittel zu wählen, das bei hohen Temperaturen eine hohe Löslichkeit für die eingesetzten Polymere aufweist und bei niedrigen Temperaturen eine niedrige Löslichkeit der eingesetzten Polymere bewirkt, so daß mit sinkender Temperatur die Polymere wieder ausfallen. Ein weiteres Kriterium für die Wahl des Lösemittels ist, daß das Polymerisat mit dem Lösemittel echte oder kolloidale Lösungen bildet.

Es wurde gefunden, daß z. B. halogenierte aromatische Kohlenwasserstoffe, Alkylester oder Phenyläther nicht nur die Polymere lösen, sondern daß sich nach dem Lösen die Polymerlösung beim Abkühlen wieder entmischt und in unerwarteter Weise poröse Polymerkügelchen gebildet werden.

In einer Ausführungsform wird als halogenierter Kohlenwasserstoff Dichlorbenzol zum Lösen der Polymere verwendet. Es sind sowohl Ortho-, Meta, als auch Paradichlorbenzole oder deren Gemische geeignet. Bevorzugt wird 1.2-Dichlorbenzol verwendet.

In einer weiteren Ausführungsform wird als Alkylester Amylacetat oder als Phenyläther Anisol zum Lösen der Polymere verwendet.

Das Lösen der Polymere erfolgt bei Temperaturen nahe den Siedepunkten der verwendeten Lösungsmittel, z. B. bei 100 bis 180 °C, vorzugsweise bei 140 bis 180 °C. Die Anwendung von Druck ist ebenfalls möglich.

Als nichtvernetzte lineare Polymere, die auch Verzweigungen tragen können, werden Polyolefine vorzugsweise Polypropylen, Polyethylen oder Polyvinylchlorid verwendet.

In einer bevorzugten Ausführungsform wird Polypropylen verwendet.

Das Abkühlen der Polymerlösung kann schnell oder langsam erfolgen.

In einer Ausführungsform der Erfindung wird die Lösung mit einer Geschwindigkeit von 1 bis 3 °C pro Minute abgekühlt.

Es ist ebenfalls im Sinne der Erfindung, die polymere Lösung unter Absenkung der Temperatur auf 60 bis 90 °C über eine Zeitdauer von 0 bis 24 Stunden zu altern. Vorzugsweise erfolgt die Alterung über eine Zeitdauer von 1 bis 3 Stunden unter Absenken der Temperatur auf 60 bis 80 °C. Nach dem Altern wird die Lösung weiter auf Raumtemperatur abgekühlt.

Je nach dem, wie die Polymerlösung abgekühlt wird, kann die Größe der Polymerkugeln beeinflußt werden.

Durch Variation der Abkühlzeit bzw. der Alterungstemperatur kann die Größe der Polymerkugeln also beeinflußt werden.

Beträgt die Alterungszeit z. B. 1 bis 2 Stunden und die Alterungstemperatur 70 °C, kann man Polymerkugeln mit einem mittleren Durchmesser von 110 bis 120 um erhalten. Die Alterungstemperatur liegt üblicherweise zwischen 60 und 100 °C, wobei festgestellt wurde, daß mit abnehmender Alterungstemperatur der Kugeldurchmesser zunimmt.

Man erhält z. B. Mikrokugeln mit einem mittleren Durchmesser < 100 µm, wenn auf eine Alterung verzichtet wird.

Ein weiterer Einflußfaktor auf die Polymerkugelgröße ist der Trockensubstanzgehalt (TS-Gehalt) des in Lösung zu bringenden Polymerisates. So hat sich ein TS-Gehalt von 20 % als günstig für eine optimale Kugelbildung erwiesen. TS-Gehalte <20 % führen zur Bildung von deutlich kleineren Kugeln.

Wird die heiße Polymerlösung in an sich bekannter Weise zur Abkühlung in ein Kühlmedium versprüht, verdüst oder vertropft, erhält man Meso- oder Makrokugeln mit einem mittleren Durchmesser von 100 - 200 µm bzw. 1.000 bis 5.000 µm.

Die gebildeten Polymerkugeln werden abgetrennt und mit einem Lösungsmittel, in dem die zum Lösen des Ausgangspolymerisates verwendeten Lösungsmittel löslich sind, gewaschen und anschließend getrocknet. Das zum Waschen der Polymerkugeln verwendete Lösungsmittel soll mit den zum Lösen der Polymerisate verwendeten Lösungsmitteln kein azeotropes Gemisch bilden.

Vorzugsweise wird Alkohol zum Waschen verwendet.

Wird 1.2-Dichlorbenzol als Lösungsmittel verwendet, wird zum Waschen vorzugsweise Isopropanol benutzt, da Isopropanol mit 1.2-Dichlorbenzol kein azeotropes Gemisch bildet, so daß eine destillative Trennung ohne weiteres möglich ist.

Wird Amylacetat als Lösungsmittel für das Polymerisat verwendet, können die Polymerkügelchen ebenfalls mit Isopropanol gewaschen werden.

Es ist ebenfalls im Sinne der Erfindung, die heiße Polymerlösung zur Abkühlung in an sich bekannte Weise durch Versprühen oder Vertropfen in ein Kühlmedium, z. B. in kalte oder flüssige Luft, in festes CO₂ oder in flüssigem Stickstoff, einzutragen.

Es hat sich als günstig erwiesen, die Kügelchen mehrmals zu waschen, um sicher zu gehen, daß das Lösemittel vollständig entfernt wird.

Erfindungsgemäß können nicht nur poröse Polymerkügelchen aus den reinen Polymeren hergestellt werden. Es ist ebenfalls möglich, physikalische oder chemische Mischungen von Polypropylen, Polyethylen oder Polyvinylchlorid als Einsatzmaterial zu verwenden.

Zur Beeinflussung der physikalischen und funktionalen Eigenschaften der Polymerkügelchen können an sich bekannte Additive in an sich bekannter Weise in das Polymer eingebaut werden. So können die Additive z. B. in gelöster oder fester Form der Polymerlösung zugemischt werden.

Es ist ebenfalls im Sinne der Erfindung, die Eigenschaften der porösen Polymerkügelchen durch Coaten oder Imprägnieren mit an sich bekannten Additiven zu beeinflussen.

Als Additive können z. B. Additive mit funktionalen Gruppen, Komplexbildner, Tenside, Porosierungsmittel, anorganische Oxide oder Tonerde verwendet werden.

In einer Ausführungsform der Erfindung wurde Titantetrachlorid, Titantrichlorid bzw. Magnesiumchlorid als Additiv zur Beeinflussung der physikalischen Eigenschaften der Polymerkügelchen verwendet.

Die erfindungsgemäß hergestellten porösen Polymerkügelchen zeichnen sich gegenüber den bisher bekannten Polymerkügelchen z. B. durch ein enges Kornspektrum und eine sehr gleichmäßige Kugelgestalt aus.

In einer bevorzugten Ausführungsform werden Polypropylenkügelchen, deren mittlerer Durchmesser 10 bis 50 µm oder 1.500 µm beträgt, hergestellt. In einer anderen bevorzugten Ausführungsform werden Polymerkügelchen mit einem mittleren Durchmesser von 500 bis 1.000 µm hergestellt.

Diese Polymerkügelchen weisen ein günstiges Porenvolumen sowie eine vorteilhafte Verteilung des Porenvolumens auf. Das Porenvolumen beträgt 0,1 cm³/g bis 3 cm³ /g, vorzugsweise 0,2 cm³/g bis 2 cm³/g, insbesondere 0,3 cm³/g bis 1,5 cm³/g. Die Verteilung des Porenvolumens ist so, daß wenigstens 90 % der Poren einen Durchmesser unter 10 µm aufweisen. Vorzugsweise weisen 90 % der Poren einen Durchmesser unter 5 µm insbesondere einen Durchmesser unter 1 µm auf.

In einer bevorzugten Ausführungsform werden Polypropylenteilchen, deren Poren zu wenigstens 90 % aus Poren bestehen, die einen Durchmesser von maximal 0,1 µm besitzen und die ein Porenvolumen von 0,3 cm³/g bis 1 cm³/g aufweisen, hergestellt.

Aufgrund ihrer Eigenschaften können sie nicht nur als Adsorptionsmittel, sondern auch als Katalysatorträger Verwendung finden.

Die erfindungsgemäß hergestellten porösen Polymerkügelchen können z. B. als Trägermaterial für Ziegler-Natta-Katalysatoren, die zur Polymerisation von Olefinen verwendet werden, eingesetzt werden.

Diese an sich bekannten Katalysatoren enthalten als katalytisch aktive Verbindung wenigstens ein Metall oder eine Metallverbindung der 3., 4. oder 6. Nebengruppe des PSE.

Diese katalytische Verbindung kann eine Metallocen-Verbindung der genannten Metalle sein, oder eine Verbindung, die wenigstens Titan, Magnesium und Chlor enthält oder ein organischer Titantrichlor-Komplex mit organischen Elektronendonorverbindungen, die freie Elektronenpaare besitzen.

Diese Verbindungen sind bekannt und zählen zum Stand der Technik.

Die Herstellung der Trägerkatalysatoren erfolgt in bekannter Weise durch Imprägnieren oder Tränken der Polymerkügelchen mit der katalytischen Verbindung, wobei die Verbindung in oder auf dem Träger fixiert wird.

Als Metallocen-Verbindung werden Verbindungen verstanden, die mindestens ein neutrales Metallocen, wobei das Metall mit wenigstens einem Halogenatom verbunden ist und mindestens ein ionisierendes Mittel enthalten. Beispiele von neutralen Metallocenen, von ionisierenden Mitteln sowie Verfahren zur Herstellung dieser Katalysatoren sind in US 5,496,782 offenbart.

Als Verbindungen, die Titan, Magnesium und Chlor enthalten, werden die Verbindungen verstanden, die in US 5,556,893 offenbart sind. Insbesondere sind Verbindungen geeignet, die Magnesium- oder Titanchlorid enthalten.

Als organischer Titantrichlor-Komplex werden Verbindungen verstanden, die gemäß US 5,206,198 durch Umsetzung von TiCl₄ mit einer Verbindung der allgemeinen Formel I

AlRₘ(Y)ₙX₃₋₍ₘ₊ₙ₎

in der
- R: ein Kohlenwasserstoffradikal, z. B. Alkyl
- Y: OR', SR', NR'R", wobei R' und R" ein Kohlenwasserstoffradikal z. B. Alkyl oder Wasserstoff
- X: Halogen bedeuten und
- n: 0 bis 3, vorzugsweise 0 bis 0,5, insbesondere kleiner als 0,45, vorzugsweise kleiner oder gleich 0,4 ist und
- m: 0 bis 3, vorzugsweise 1 bis 2 ist.
Die Summe m+n ist kleiner oder gleich 3.

Zur Herstellung der Trägerkatalysatoren werden vorzugsweise die erfindungsgemäß hergestellten porösen Polypropylenkügelchen als Trägermaterial verwendet.

Diese Trägerkatalysatoren sind für die Homo- und/oder Copolymerisation von Olefinen mit 2 - 20 Kohlenstoffatomen z. B. Äthylen, Propylen, 1-Buten, 4-Methylpenten, 3-Methylbuten geeignet.

Die Verfahrensbedingungen derartiger Polymerisationsreaktionen sind bekannt und gehören zum Stand der Technik.

Die nachfolgenden Beispiele sollen die Erfindung erläutern jedoch nicht einschränken.

### Beispiele

### Beispiel 1:

### Batchweise Herstellung von Polypropylenkügelchen

60 kg Polypropylen werden in einem mit Rührwerk ausgerüstetem Doppelmantel-Behälter unter Dampfbeheizung in Dichlorbenzol (600 kg) gelöst. Lösetemperatur 160 °C. Die Lösung wird auf 70 °C abgekühlt. Ca. 2 Stunden wird diese Temperatur (70 °C) im Behälter konstant gehalten.

Die entstandene Suspension wird anschließend auf Umgebungstemperatur (25 °C) abgekühlt. Die gebildeten Polypropylenkügelchen werden abfiltriert und mit 1.800 kg Isopropanol gewaschen. Die Waschlösung, ein Dichlorbenzol-Isopropanol-Gemisch, wird destillativ wieder in Dichlorbenzol und Isopropanol aufgetrennt und kann wieder verwendet werden. Die gewaschenen Polypropylenkugeln werden mit Stickstoff getrocknet und durch Sieben fraktioniert.

### Beispiel 2:

Versuchsdurchführung analog Beispiel 1, variiert wurde der Trockensubstanzgehalt (TS-Gehalt) an Polypropylen sowie die Alterungszeit. Die Lösungstemperatur beträgt 150 °C, als Lösungsmittel wird Amylacetat verwendet.

Durch Variation der Abkühlzeit von Lösungs- auf Alterungstemperatur im Bereich 40 min. bis 3 h wurde festgestellt, daß kurze Abkühlzeiten kleine Kügelchen ergeben, eine Verlängerung der Abkühlzeit fördert die Vergrößerung des Kugeldurchmessers.

Des weiteren wurde festgestellt, daß mit abnehmender Alterungstemperatur die Bildung von Kugeln mit größerem Durchmesser ebenfalls begünstigt ist.

Die Alterungszeit hat keinen wesentlichen Einfluß auf die Größe der Polymerkugeln.

### Beispiel 3:

Versuchsdurchführung analog Beispiel 1
- Lösungsmittel:: Anisol
- Lösungstemperatur:: 120 °C

Bei TS-Gehalten von 5 bis 10 % wurden Kugeln mit relativ kleinem Durchmesser erhalten.

### Beispiele 4 - 6:

Polypropylen wurde bei 160 °C in Dichlorbenzol gelöst und in bekannter Art und Weise in ein kaltes Medium vertropft. Als kaltes Medium kamen kalte Luft, festes CO₂ und flüssiger Stickstoff zur Anwendung.

Die gebildeten Polymerkugeln wurden abgetrennt, mit Isopropanol gewaschen, getrocknet und durch Sieben fraktioniert.

Dichlorbenzol und Isopropanol wurden durch Destillation aus dem Waschwasser zurückgewonnen.

Tabelle 1 weist Ergebnisse der batchweise Herstellung der Polymerkügelchen aus.

Ergebnisse, die beim Versprühen der Polymerlösung in Luft ermittelt wurden, werden in Tabelle 2 aufgeführt.

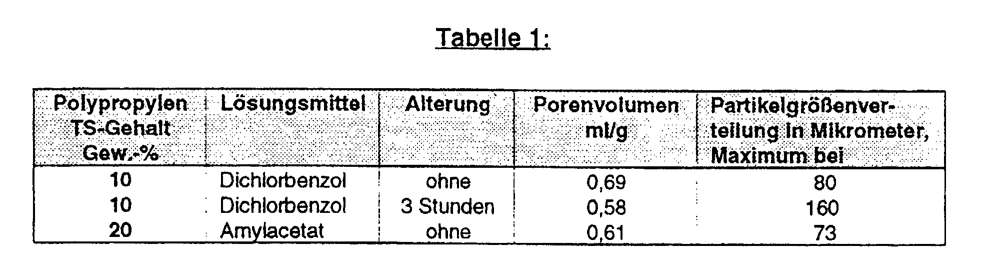

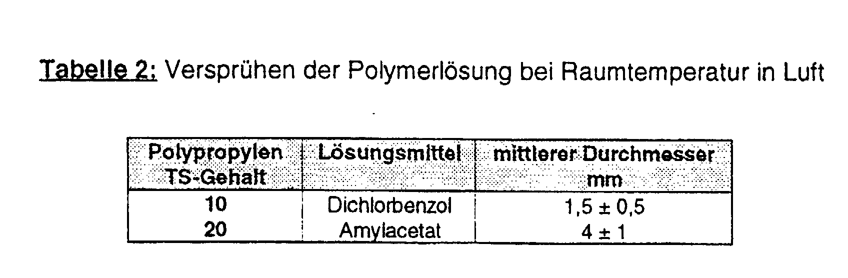

### Beispiel 7:

### A. Herstellung des Katalysators

In einen 1 1-Autoklaven werden 25 g Polypropylenkügelchen mit einem Porenvolumen von 0,58 ml/g, die gemäß Beispiel 2 hergestellt wurden, eingetragen. Dazu fügt man bei 30 °C 23 ml (45,2 mmol) Diisoamyläther. In diese Mischung werden innerhalb einer halben Stunde 20 ml TiCl₄ eingetragen. Die Temperatur wird bei 30 °C gehalten.

Zu dieser Suspension wird innerhalb einer Stunde

Al(C₂H₅)_{1,75}(O-CH₂-CH₂-CH(CH₃)₂)_{0,25}Cl

hinzugefügt.

Die Aluminiumverbindung wird zuvor durch Mischen von 6 ml Diethylaluminiumchlorid (DEAC) und 1,3 ml Isoamylalkohol und 27 ml Hexan erhalten.

Die Temperatur wird innerhalb einer Stunde auf 100 °C erhöht und 2 Stunden gehalten. Anschließend wird auf 20 °C abgekühlt.

Der feste Katalysator wird abgetrennt, mit Hexan gewaschen und im Stickstoffstrom getrocknet. Der Katalysator enthält 78 g Ti und 167 g Cl pro kg Katalysator (Bestimmung durch Elementaranalyse).

### B. Polymerisation von Propylen

In einen 5 l Autoklaven werden unter Stickstoffatmosphäre
- 400 mg DEAC, gelöst in Hexan
- 60 mg TiCl₃
- Wasserstoff mit einem Partialdruck von ca. 1 bar
- 3 l flüssiges Propylen
eingetragen.

Die Konzentration der DEAC/Hexan-Lösung wurde so gewählt, daß 80 g DEAC in 1 l Hexan gelöst wurden.

Das Molverhältnis DEAC:TiCl₃ im Katalysator ist ca. 10. Das Gemisch wird 3 Stunden bei 65 °C gerührt. Durch Entgasen wird das überschüssige Propylen entfernt.

Die katalytische Aktivität wird indirekt durch die Bestimmung des Restgehaltes an Titan im Polymer durch Röntgen-Fluoreszenz ermittelt. Sie beträgt, ausgedrückt in g Polypropylen pro g TiCl₃, 9410.

Die Produktivität, ausgedrückt in g Polypropylen pro g Katalysator, beträgt 2364.

Polypropyleneigenschaften:
- spez. Gewicht: 383 g/l
- Schmelzviskosität (ASTM D Norm 1238): 6,9 g/10 min

### Beispiel 8:

### A. Herstellung des Katalysators

100 ml einer Lösung, die durch Mischen von 76 g Magnesiumchlorid mit 500 ml Titantetrabutylat in 400 ml Heptan bei 90 °C nach 4 Stunden erhalten wurde, werden in einen 1 l-Reaktor, der mit Stickstoff gespült wurde, eingetragen. Danach werden 420 ml Hexan, 100 ml Silikonöl (Fluid 200, Viskosität 50 cSt) und 25 g Polypropylenkügelchen, analog Beispiel 7A, hinzugefügt.

Bei einer Temperatur von 10 °C werden innerhalb von 2 Stunden 37 ml Siliciumtetrachlorid in die Mischung eingetragen. Die Temperatur wird innerhalb einer Stunde auf 100 °C erhöht und 2 Stunden gehalten.

Die feste Phase wird abgetrennt und mit Hexan gewaschen. Innerhalb einer Stunde werden bei Umgebungstemperatur 375 ml Hexan und 42 ml Titantetrachlorid hinzugefügt.

Die Temperatur wird innerhalb einer Stunde auf 100 °C erhöht und 2 Stunden gehalten.

Nach Abtrennung und Reinigung der festen Phase werden 1,1 ml Diisobutylphthalat zugefügt. Die Temperatur wird wiederum innerhalb einer Stunde auf 100 °C erhöht und 1 Stunde gehalten.

Die feste Phase wird abgetrennt und mit Hexan gewaschen. Danach werden 42 ml Titantetrachlorid innerhalb einer Stunde hinzugefügt. Die Temperatur wird wiederum innerhalb einer Stunde auf 100 °C erhöht und 2 Stunden gehalten.

Der Katalysator wird abgetrennt, mit Hexan gewaschen und getrocknet.

Zusammensetzung pro kg Katalysator:
1,9 g Ti
22 g Mg
70 g Cl

### B. Polymerisation von Propylen

In einen 5 l-Autoklaven werden nacheinander unter Schutzgasatmosphäre bei 30 °C und unter Rühren 1 l Hexan, 5 mmol Triethylaluminium (TEAL) und 0,5 mmol Diphenyldimethoxysilan eingetragen. Nach 5 min. werden 35 mg Katalysator hinzugefügt.
- Atomverhältnisse:: Al/Ti = 200
Al/Si = 10

Danach werden Wasserstoff mit einem Partialdruck von 0,05 bar und 2 l Propylen (flüssig) hinzugefügt.

Die Suspension wird bei einem Druck von 2 bar und einer Temperatur von 30 °C 15 min. gerührt und anschließend auf 70 °C erwärmt. Bei dieser Temperatur wird der Propylendruck auf 7 bar geregelt.
- Polymerisationsdauer:: 2 Stunden.
Das Polypropylen wird isoliert.

Die katalytische Aktivität, ausgedrückt in kg PP pro g Ti, beträgt 476.

Die Produktivität, ausgedrückt in g PP pro g Katalysator, beträgt 905.
- Polypropyleneigenschaften:: spez. Gewicht 244 g/l
Schmelzviskosität 6 g/10 min (ASTM D Norm 1238)

### Beispiel 9:

### A. Herstellung des Katalysators

### Lösung 1:

220 mg Dimethylsilyl-bis-(2-methyl-indenyl)dichlorzirkonium werden in 20 ml einer 10 gew.-%igen Lösung von Methylaluminoxan (MAO) in Toluol gelöst.

### Lösung 2:

12,5 g Polypropylenkügelchen, hergestellt nach Beispiel 2, werden mit 42,5 g MAO-Lösung (10 Gew.-% MAO in Toluol gelöst) vermischt.

Lösung 1 und 2 werden gemischt, das Toluol wird bei 40 mbar und 38 °C innerhalb 2 Stunden abgetrennt. Man erhält einen pulverförmigen Katalysator mit guter Fließfähigkeit.
- Zusammensetzung pro kg Katalysator:: 1,7 g Zr
86 g Al

### B. Polymerisation von Propylen

Die Polymerisation des Propylens erfolgt analog Beispiel 7, wobei folgende Bedingungen abgeändert wurden.

Der Katalysator wird bei 50 °C hinzugefügt und die Temperatur wird nach 10 min. auf 70 °C erhöht.

Die Polymerisationsdauer beträgt 2 Stunden.

Der Wasserstoffpartialdruck beträgt 0,1 bar.

DEAC wird durch 1 mmol TEAL ersetzt.

Die katalytische Aktivität, ausgedrückt in kg PP pro g Zr, beträgt 1.000. Die Produktivität, ausgedrückt in g PP pro g Katalysator, beträgt 1.700.
- Polypropyleneigenschaften:: spez. Gewicht 311 g/l
Schmelzviskosität (ASTMD Norm 1238) 65 g/10 min.

## Patentansprüche

1. Verfahren zur Herstellung von porösen Polyolefin- oder PVC-Kügelchen mit einem Kornspektrum im Bereich von 1 bis 5.000 Mikrometer durch
a) Lösen des Polymeren in einem Lösungsmittel, mit dem das Polymer eine echte oder kolloidale Lösung bildet, bei Temperaturen von 100 bis 180 °C,
b) Abkühlen der Lösung,
c) Abtrennen der gebildeten Polymerkügelchen,
d) Entfernen des Lösungsmittels,
e) Trocknen der Polymerkügelchen,
dadurch gekennzeichnet, daß als Lösungsmittel halogenierte aromatische Kohlenwasserstoffe, Alkylester oder Phenylether verwendet werden.

2. Verfahren zur Herstellung von Polymerkügelchen nach Anspruch 1, dadurch gekennzeichnet, daß als Lösungsmittel Dichlorbenzol, Amylacetat oder Anisol verwendet werden.

3. Verfahren zur Herstellung von Polymerkügelchen nach Anspruch 1 und 2, dadurch gekennzeichnet, daß die Lösung unter Absenkung der Temperatur auf 60 bis 90 °C über eine Zeitdauer von 0 bis 24 Stunden gealtert wird.

4. Verfahren zur Herstellung von Polymerkügelchen nach Anspruch 1 bis 3, dadurch gekennzeichnet, daß die Lösung 1 bis 3 Stunden gealtert wird.

5. Verfahren zur Herstellung von Polymerkügelchen nach Anspruch 1, dadurch gekennzeichnet, daß die Polymerlösung in ein Kühlmedium eingetragen wird.

6. Verfahren zur Herstellung von Polymerkügelchen nach Anspruch 1 bis 5, dadurch gekennzeichnet, daß die Polymerlösung in das Kühlmedium versprüht, verdüst oder vertropft wird.

7. Verfahren zur Herstellung von Polymerkügelchen nach Anspruch 1 bis 6, dadurch gekennzeichnet, daß als Kühlmedium in fester, flüssiger oder gasförmiger Form Luft, CO₂ oder N₂ verwendet wird.

8. Verfahren zur Herstellung von Polymerkügelchen nach Anspruch 1 bis 7, dadurch gekennzeichnet, daß die abgetrennten Polymerkügelchen gewaschen und anschließend getrocknet werden.

9. Verfahren zur Herstellung von Polymerkügelchen nach Anspruch 1 bis 8, dadurch gekennzeichnet, daß die Polymerkügelchen mit Alkohol gewaschen werden.

10. Verfahren zur Herstellung von Polymerkügelchen nach Anspruch 1 bis 9, dadurch gekennzeichnet, daß die Polymerkügelchen mit Isopropanol gewaschen werden.

11. Verfahren zur Herstellung von Polymerkügelchen nach Anspruch 1 bis 10, dadurch gekennzeichnet, daß zur Beeinflussung der physikalischen und/oder funktionalen Eigenschaften der Polymerkügelchen, der Polymerlösung Additive mit funktionalen Gruppen in gelöster oder fester Form zugemischt werden.

12. Verfahren zur Herstellung von Polymerkügelchen nach Anspruch 1 bis 11, dadurch gekennzeichnet, daß als Additive anorganische Oxide, z. B. TiCl₄, TiCl₃, MgCl₂, Komplexbildner, Porosierungsmittel, Tenside verwendet werden.

13. Verfahren zur Herstellung von Polymerkügelchen nach Anspruch 1 bis 12, dadurch gekennzeichnet, daß als Additiv Tonerde verwendet wird.

## Claims

1. A process for the preparation of porous polyolefin or PVC globules having a grain size range in the range from 1 to 5,000 micrometres by
a) dissolving the polymer in a solvent with which the polymer forms a true or colloidal solution, at temperatures of 100 to 180°C,
b) cooling the solution,
c) separating off the resulting polymer globules,
d) removing the solvent,
e) drying the polymer globules,
characterised in that halogenated aromatic hydrocarbons, alkyl esters or phenyl ethers are used as solvent.

2. A process for the preparation of polymer globules according to Claim 1, characterised in that dichlorobenzene, amyl acetate or anisole is used as solvent.

3. A process for the preparation of polymer globules according to Claims 1 and 2, characterised in that the solution is aged for a time of 0 to 24 hours with the temperature being lowered to 60 to 90°C.

4. A process for the preparation of polymer globules according to Claims 1 to 3, characterised in that the solution is aged for 1 to 3 hours.

5. A process for the preparation of polymer globules according to Claim 1, characterised in that the polymer solution is introduced into a cooling medium.

6. A process for the preparation of polymer globules according to Claims 1 to 5, characterised in that the polymer solution is sprayed, atomised or dropped into the cooling medium.

7. A process for the preparation of polymer globules according to Claims 1 to 6, characterised in that air, CO₂ or N₂ in solid, liquid or gaseous form is used as the cooling medium.

8. A process for the preparation of polymer globules according to Claims 1 to 7, characterised in that the polymer globules which are separated off are washed and then dried.

9. A process for the preparation of polymer globules according to Claims 1 to 8, characterised in that the polymer globules are washed with alcohol.

10. A process for the preparation of polymer globules according to Claims 1 to 9, characterised in that the polymer globules are washed with isopropanol.

11. A process for the preparation of polymer globules according to Claims 1 to 10, characterised in that additives with functional groups in dissolved or solid form are admixed to the polymer solution to influence the physical and/or functional properties of the polymer globules.

12. A process for the preparation of polymer globules according to Claims 1 to 11, characterised in that inorganic oxides, e.g. TiCl₄, TiCl₃, MgCl₂, complexing agents, porosity agents and surfactants are used as additives.

13. A process for the preparation of polymer globules according to Claims 1 to 12, characterised in that alumina is used as additive.

## Revendications

1. Procédé pour l'obtention de microbilles poreuses en polyoléfine ou PVC présentant un spectre granulométrique dans la gamme de 1 à 5 000 microns, par
a) dissolution du polymère dans un solvant, avec lequel le polymère forme une solution vraie ou une solution colloïdale, à des températures de 100 à 180 °C,
b) refroidissement de la solution,
c) séparation des microbilles polymères formées,
d) élimination du solvant,
e) séchage des microbilles polymères,
caractérisé en ce que l'on utilise comme solvant des hydrocarbures aromatiques halogénés, des alkylesters ou des phényléthers.

2. Procédé pour l'obtention de microbilles polymères selon la revendication 1, caractérisé en ce que l'on utilise comme solvant le dichlorobenzol, l'acétate d'amyle ou l'anisol.

3. Procédé pour l'obtention de microbilles polymères selon les revendications 1 et 2, caractérisé en ce que la solution est vieillie en abaissant la température de 60 à 90 °C sur une durée comprise entre 0 et 24 heures.

4. Procédé pour l'obtention de microbilles polymères selon l'une des revendications 1 à 3, caractérisé en ce que la solution est vieillie 1 à 3 heures.

5. Procédé pour l'obtention de microbilles polymères selon la revendication 1, caractérisé en ce que la solution polymère est introduite dans un agent de refroidissement.

6. Procédé pour l'obtention de microbilles polymères selon l'une des revendications 1 à 5, caractérisé en ce que la solution polymère est pulvérisée, atomisée ou introduite goutte à goutte dans l'agent de refroidissement.

7. Procédé pour l'obtention de microbilles polymères selon l'une des revendications 1 à 6, caractérisé en ce que, comme agent de refroidissement, on utilise de l'air, CO₂ ou N₂, sous forme solide, liquide ou gazeuse.

8. Procédé pour l'obtention de microbilles polymères selon l'une des revendications 1 à 7, caractérisé en ce que les microbilles polymères séparées sont lavées puis séchées.

9. Procédé pour l'obtention de microbilles polymères selon l'une des revendications 1 à 8, caractérisé en ce que les microbilles polymères sont lavées à l'alcool.

10. Procédé pour l'obtention de microbilles polymères selon l'une des revendications 1 à 9, caractérisé en ce que les microbilles polymères sont lavées à l'isopropanol.

11. Procédé pour l'obtention de microbilles polymères selon l'une des revendications 1 à 10, caractérisé en ce que, pour influer sur les propriétés physiques et/ou fonctionnelles des microbilles polymères, on mélange à la solution polymère, sous une forme dissoute ou solide, des additifs présentant des groupes fonctionnels.

12. Procédé pour l'obtention de microbilles polymères selon l'une des revendications 1 à 11, caractérisé en ce que l'on utilise comme additifs des oxydes inorganiques, par exemple TiCl₄, TiCl₃, MgCl₂, des agents complexants, des agents porogènes, des tensioactifs.

13. Procédé pour l'obtention de microbilles polymères selon l'une des revendications 1 à 12, caractérisé en ce que l'on utilise l'alumine comme additif.
